# EUROPEAN PATENT APPLICATION

(11) **EP 4 329 261 A1**
(43) Date of publication of application: **28.02.2024**
(21) Application number: 21940612.1
(22) Date of filing: 22.12.2021
(51) Int. Cl.: H04L 47/10, H04L 47/6275

(54) **DATA PROCESSING METHOD AND RELATED DEVICE**

(30) Priority: 21.05.2021 CN 202110559029
(71) Applicant: Huawei Technologies Co., Ltd., Longgang Shenzhen, Guangdong 518129 (CN)
(72) Inventor: WU, Tao, Shenzhen, Guangdong 518129 (CN); HAN, Lei, Shenzhen, Guangdong 518129 (CN); ZHENG, Hewen, Shenzhen, Guangdong 518129 (CN); YAN, Jian, Shenzhen, Guangdong 518129 (CN); GONG, Xiangyu, Shenzhen, Guangdong 518129 (CN); SONG, Xinyi, Shenzhen, Guangdong 518129 (CN)
(74) Representative: Epping - Hermann - Fischer
(86) International application number: PCT/CN2021/140398
(87) International publication number: WO 2022/242170

(57) **Abstract**

Embodiments of this application disclose a data processing method and a related device, to improve stability and reliability of data transmission. In embodiments of this application, the method includes: If a target buffer that is corresponding to a target priority and that is on a network device reaches a first threshold, the network device sends a pause message to an upstream device, so that the upstream device stops sending a first data packet corresponding to the target priority. If duration in which the network device stops buffering a second data packet is greater than preset duration, and the target buffer falls back below a second threshold, the network device sends a sending resumption message to the upstream device, so that the upstream device sends a third data packet corresponding to the target priority. The second data packet is a data packet that is buffered after the network device sends the pause message and before the network device sends the sending resumption message and that is corresponding to the target priority.

## Description

This application claims priority to Chinese Patent Application No. 202110559029.3, filed with the China National Intellectual Property Administration on May 21, 2021 and entitled "DATA PROCESSING METHOD AND RELATED DEVICE", which is incorporated herein by reference in its entirety.

### TECHNICAL FIELD

Embodiments of this application relate to the communication field, and in particular, to a data processing method and a related device.

### BACKGROUND

With rapid growth of social economy, the data center industry is also booming around the world. Data centers have gradually become strategic resources as important as human resources and natural resources. In an information era, only large-scale and flexible application of data can promote rapid and steady development of the data center industry in China. How to implement stable transmission of a large volume of data in the data center also needs to be resolved urgently. In a data processing method, a network device may divide, based on a time interval between receiving moments of data packets, a data flow into a plurality of flowlets (flowlet) including a plurality of data packets, and select, based on flowlet management granularity, a link with a light load to forward the data packets, so that data packets in a same flowlet are forwarded on a same link.

In this data packet processing method, if a data volume of data packets in a flowlet is excessively large, link congestion is likely to occur during forwarding, causing packet loss, and consequently affecting stability and reliability of data transmission.

### SUMMARY

Embodiments of this application provide a data processing method and a related device. Data packets in a data flow are distributed to different flowlets by controlling a waiting time of an upstream device, relieving transmission link congestion, thereby improving stability and reliability of data transmission.

According to a first aspect of embodiments of this application, a data processing method is provided, including the following steps:
During data transmission, a network device may receive, from an upstream device, a data packet corresponding to at least one priority. As a processing capability and buffer space of the network device are limited, the network device may set a buffer threshold for each priority, to ensure normal operation of the network device. If a target buffer that is corresponding to a target priority and that is on the network device reaches a first threshold, which means that the buffer space of the network device is insufficient, the network device may send a pause message to the upstream device. The pause message indicates the upstream device to stop sending a first data packet corresponding to the target priority. Due to a network delay, the pause message sent by the network device to the upstream device requires a period of time to be received by the upstream device. In addition, the upstream device also requires a period of time to respond to the pause message. In this period of time, the upstream device sends a second data packet corresponding to the target priority to the network device. In other words, the network device continues to buffer the second data packet from the upstream device.

The network device may further send at least one of the first data packet and the second data packet to a downstream device, so that the target buffer is reduced, thereby reducing packet stacking. When the target buffer falls back below a second threshold, which means that the buffer space of the network device is sufficient, the network device may continue to buffer a data packet corresponding to the target priority. That the target buffer falls back below the second threshold includes that the target buffer is less than or equal to the second threshold.

If duration in which the network device stops buffering the second data packet is greater than preset duration, and the target buffer falls back below the second threshold, the network device sends a sending resumption message to the upstream device. The sending resumption message indicates the upstream device to send a third data packet corresponding to the target priority to the network device. If the duration in which the network device stops buffering the second data packet is greater than first preset duration, which means that a time interval between a moment at which the network device receives the first data packet or the second data packet and a moment at which the network device receives the third data packet exceeds a flowlet gap time, the first data packet or the second data packet and the third data packet belong to different flowlets.

In this embodiment of this application, when the buffer space is insufficient, the network device sends the pause message to the upstream device, so that the upstream device stops sending a data packet corresponding to the target priority. The network device further controls duration in which the upstream device stops sending the data packet, so that data packets in a data flow are distributed to different flowlets, reducing a congestion degree of a transmission link, thereby improving stability and reliability of data transmission.

With reference to the first aspect, in a first implementation of the first aspect of embodiments of this application, before sending the pause message to the upstream device, the network device determines whether a received target data packet corresponding to the target priority is a 1^{st} data packet, and processes the target data packet based on a result. The 1^{st} data packet is the first one of data packets that is corresponding to a target data flow in the target priority and that is received by the network device. Specifically, if the network device determines that the target data packet is the 1^{st} data packet, the network device may query a forwarding table to obtain a plurality of outgoing interfaces, perform hash (hash) routing for the target data packet according to an equal-cost multi-path routing (equal-cost multi-path routing, ECMP) policy, and determine a first outgoing interface corresponding to the target data packet from the plurality of outgoing interfaces. The ECMP policy usually provides a per-flow load balancing mechanism. In this mechanism, a feature field of a data packet is used as a hash factor, a hash-key (hash-key) value is generated based on a hash algorithm, and a member link is selected from load-balancing links based on the hash-key value to forward the data packet. To be specific, data packets with a same hash-key value are forwarded through a same outgoing interface. The feature field of the data packet includes fields such as a source media access control (media access control, MAC) address, a destination MAC address, and an IP quintuple.

With reference to the first implementation of the first aspect, in a second implementation of the first aspect of embodiments of this application, after determining the first outgoing interface, the network device may determine the target buffer. Before being sent out, the target data packet may be buffered in the network device. In this case, the buffered target data packet may be considered as a part of the target buffer. If the target buffer reaches the first threshold, the step of sending the pause message to the upstream device is triggered. If the target buffer does not reach the first threshold, the network device may forward the target data packet through the first outgoing interface.

In this embodiment of this application, when the target data packet is the 1^{st} data packet corresponding to the target data flow in the target priority, the network device performs hash routing according to the ECMP policy. Because feature fields of data packets in a same data flow (flow) are the same, different data flows are forwarded on different links, and a time sequence of arrival of data packets in a same data flow at the downstream device is also ensured, thereby improving reliability of data transmission.

With reference to the first implementation of the first aspect, in a third implementation of the first aspect of embodiments of this application, if the network device determines that the target data packet is not the 1^{st} data packet, the network device may determine a forwarding outgoing interface of a data packet in a flowlet based on dynamic load balancing. Specifically, the network device may determine whether a time interval between the target data packet and a previous data packet is greater than the flowlet gap time. The previous data packet is corresponding to the target data flow in the target priority. If the time interval is greater than the flowlet gap time, the network device may determine that the target data packet and the previous data packet belong to different flowlets, and select a second outgoing interface to forward the target data packet. If the time interval is less than or equal to the flowlet gap time, the network device may determine that the target data packet and the previous data packet belong to a same flowlet. The dynamic load balancing means that the network device may forward a data packet by using a link with a light load as a forwarding link, so that data packets in a same flowlet are forwarded on a same link. With reference to the third implementation of the first aspect, in a fourth implementation of the first aspect of embodiments of this application, after determining that the target data packet and the previous data packet belong to a same flowlet, the network device may determine a third interface corresponding to the previous data packet. Before being sent out, the target data packet may be buffered in the network device. In this case, the buffered target data packet may be considered as a part of the target buffer. The network device may determine the target buffer, and if the target buffer reaches the first threshold, trigger the step of sending the pause message to the upstream device. If the target buffer does not reach the first threshold, the network device may forward the target data packet through the third outgoing interface.

In this embodiment of this application, the network device may further select, based on flowlet management granularity through dynamic load balancing, a link with a light load from a plurality of links to forward a data packet, thereby improving efficiency of data transmission.

With reference to any one of the first aspect, and the first to fourth implementations of the first aspect, in a fifth implementation of the first aspect of embodiments of this application, after the network device sends the pause message to the upstream device, the upstream device still sends, due to a delay, the second data packet corresponding to the target priority to the network device before receiving the pause message. The network device starts a first timer when receiving the second data packet. If duration recorded by the first timer is greater than the preset duration, the network device may determine that the duration in which the network device stops buffering the second data packet is greater than the preset duration.

With reference to any one of the first aspect, and the first to fourth implementations of the first aspect, in a sixth implementation of the first aspect of embodiments of this application, the network device may further start a second timer when sending the pause message. If duration recorded by the second timer is greater than the flowlet gap time, the network device may determine that the duration in which the network device stops buffering the second data packet is greater than the preset duration.

With reference to any one of the first aspect, and the first to fourth implementations of the first aspect, in a seventh implementation of the first aspect of embodiments of this application, after the network device sends the pause message to the upstream device, the upstream device still sends, due to a delay, the second data packet corresponding to the target priority to the network device before receiving the pause message. The network device may record a moment at which the second data packet is received. If a difference between a current moment and a receiving moment of the second data packet is greater than the preset duration, the network device may determine that the duration in which the network device stops buffering the second data packet is greater than the preset duration.

With reference to any one of the first aspect, and the first to fourth implementations of the first aspect, in an eighth implementation of the first aspect of embodiments of this application, the network device may further record a moment at which the network device sends the pause message to the upstream device. If a difference between a current moment and a sending moment of the pause message is greater than the flowlet gap time, the network device may determine that the duration in which the network device stops buffering the second data packet is greater than the preset duration.

With reference to any one of the first aspect, and the first to eighth implementations of the first aspect, in a ninth implementation of the first aspect of embodiments of this application, the preset duration includes a difference between the flowlet gap time and in-flight duration. The in-flight duration is a maximum value of a difference between a first moment and a second moment. The first moment is a moment at which the network device sends the pause message to the upstream device. The second moment is a moment at which the network device receives the second data packet.

In this embodiment of this application, the network device may determine, in a plurality of manners, whether the duration in which the network device stops buffering the second data packet is greater than the preset duration. A specific manner may be selected based on an actual application requirement, thereby improving flexibility of technical solutions.

With reference to any one of the first aspect, and the first to ninth implementations of the first aspect, in a tenth implementation of the first aspect of embodiments of this application, after the network device sends the sending resumption message to the upstream device, the network device may receive the third data packet sent by the upstream device. A time interval between the third data packet and the second data packet is greater than the flowlet gap time. Therefore, the network device may determine that the first data packet or the second data packet and the third data packet belong to different flowlets.

In this embodiment of this application, when the corresponding target buffer reaches the threshold, the upstream device may be controlled to stop sending the data packet corresponding to the target priority and wait for a period of time, so that a data packet sent by the upstream device again and a previously buffered data packet belong to different flowlets, thereby reducing a congestion degree of a link.

With reference to any one of the first aspect, and the first to tenth implementations of the first aspect, in an eleventh implementation of the first aspect of embodiments of this application, if the duration in which the network device stops buffering the second data packet is less than or equal to the preset duration, and/or the target buffer is greater than the second threshold, the network device does not send the sending resumption message to the upstream device.

Specifically, if the duration in which the network device stops buffering the second data packet is less than or equal to the preset duration, but the target buffer falls back below the second threshold, the network device may continue to wait, and send the sending resumption message to the upstream device only when the duration in which the network device stops buffering the second data packet is greater than the preset duration.

If the duration in which the network device stops buffering is greater than the preset duration, but the target buffer is greater than the second threshold, the network device sends a data packet corresponding to the target priority to the downstream device, to reduce the target buffer, and sends the sending resumption message to the upstream device when the target buffer is less than or equal to the second threshold. The data packet corresponding to the target priority includes at least one of the first data packet and the second data packet.

If the duration in which the network device stops buffering the second data packet is less than or equal to the preset duration, and the target buffer is greater than the second threshold, the network device may send the data packet corresponding to the target priority to the downstream device while waiting, and then send the sending resumption message to the upstream device only when the duration in which the network device stops buffering the second data packet is greater than the preset duration and the target buffer falls back below the second threshold.

In this embodiment of this application, when the network device determines that a condition is not satisfied, that is, the duration in which the network device stops buffering the second data packet is not greater than the preset duration, and/or the target buffer does not fall back below the second threshold, the network device does not send the sending resumption message to the upstream device, and further takes different measures to satisfy a condition for sending the sending resumption message to the upstream device as soon as possible, thereby improving practicability and implementability of technical solutions.

With reference to any one of the first aspect, and the first to eleventh implementations of the first aspect, in a twelfth implementation of the first aspect of embodiments of this application, the data processing method provided in embodiments of this application may be applied to a data center. The data center includes a network device and an upstream device. The network device may be a switch, and the upstream device may be a server.

According to a second aspect of embodiments of this application, a data processing apparatus is provided, including a sending unit, configured to: send a pause message to an upstream device if a target buffer that is corresponding to a target priority and that is on the data processing apparatus reaches a first threshold, where the pause message indicates the upstream device to stop sending a first data packet corresponding to the target priority; and send a sending resumption message to the upstream device if duration in which the data processing apparatus stops buffering a second data packet is greater than preset duration and the target buffer falls back below a second threshold, where the sending resumption message indicates the upstream device to send a third data packet corresponding to the target priority to the data processing apparatus, and the second data packet is a data packet that is buffered after the data processing apparatus sends the pause message and before the data processing apparatus sends the sending resumption message and that is corresponding to the target priority.

Beneficial effects shown in this aspect are similar to those shown in the first aspect, and details are not described herein again.

According to a third aspect of embodiments of this application, a network device is provided, including a processor, a memory, and a communication interface. The processor and the memory are connected to the communication interface. The processor is configured to perform the method in the first aspect.

Beneficial effects shown in this aspect are similar to those shown in the first aspect, and details are not described herein again.

According to a fourth aspect of embodiments of this application, a computer-readable storage medium is provided. The computer-readable storage medium stores a program. When the program is executed by a computer, the method in the first aspect is performed.

Beneficial effects shown in this aspect are similar to those shown in the first aspect, and details are not described herein again.

According to a fifth aspect of embodiments of this application, a computer program product is provided. When the computer program product is executed on a computer, the computer performs the method in the first aspect.

Beneficial effects shown in this aspect are similar to those shown in the first aspect, and details are not described herein again.

### BRIEF DESCRIPTION OF DRAWINGS

FIG. 1 is a schematic diagram of a system architecture of a data processing method according to an embodiment of this application;
FIG. 2 is a schematic diagram of a principle of a priority flow control protocol;
FIG. 3 is a schematic flowchart of a data processing method according to an embodiment of this application;
FIG. 4 is another schematic flowchart of a data processing method according to an embodiment of this application;
FIG. 5 is another schematic flowchart of a data processing method according to an embodiment of this application;
FIG. 6 is a schematic diagram of a structure of a data processing apparatus according to an embodiment of this application; and
FIG. 7 is a schematic diagram of a structure of a network device according to an embodiment of this application.

### DESCRIPTION OF EMBODIMENTS

Embodiments of this application provide a data processing method and a related device. Data packets in a data flow are distributed to different flowlets by controlling a waiting time of an upstream device, relieving transmission link congestion, thereby improving stability and reliability of data transmission.

First, concepts that may be involved in embodiments of this application are explained.

A flowlet may be understood as a data packet set including at least one data packet. In a same data flow, if an interval between two adjacent data packets is greater than a flowlet gap time (flowlet gap time), it is considered that the two data packets belong to different flowlets; or if a time interval between two adjacent data packets is less than or equal to a flowlet gap time, it is considered that the two data packets belong to a same flowlet.

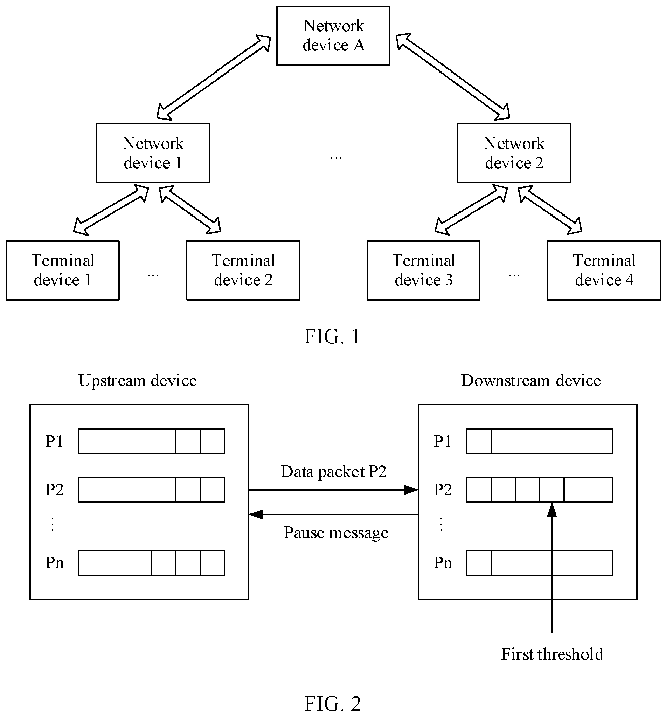

The following briefly describes a system architecture of a data processing method according to an embodiment of this application. Refer to FIG. 1. FIG. 1 is a schematic diagram of a system architecture of a data processing method according to an embodiment of this application.

The data processing method provided in this embodiment of this application may be applied to a data center. A common networking structure in the data center is shown in FIG. 1. A network device 1 may not only be in communication with a network device A, but also perform data transmission with a terminal device 1 and a terminal device 2. Similarly, a network device 2 may also be in communication with a terminal device and another network device. To ensure that no packet loss occurs on a network, each device in networking requires a priority flow control (priority flow control, PFC) feature to be enabled, and a PFC parameter corresponding to a port priority is set for each network device and each terminal device. The PFC parameter includes a first threshold, a second threshold, and headroom (headroom, HDRM). The first threshold is a threshold that packet stacking in a priority queue requires an upstream device to stop sending, which may be XOFF. The second threshold is a threshold that packet stacking in a priority queue allows an upstream device to continue sending, which may be XON. The headroom is space for buffering an in-flight packet on a line after a downstream device sends a pause message to an upstream device.

As a part of a data center bridging (data center bridging, DCB) protocol, a PFC protocol is a set of Ethernet extension protocols defined by the IEEE 802.1 working group, and is used to construct lossless Ethernet. The following describes a principle of the PFC protocol with reference to FIG. 2. Refer to FIG. 2. FIG. 2 is a schematic diagram of a principle of a priority flow control protocol. As shown in FIG. 2, an upstream device may send, to a downstream device, data packets corresponding to a plurality of priorities, for example, a data packet P1 corresponding to a priority 1. When the downstream device finds that a receiving capability is lower than a sending capability of the upstream device, that is, after a buffer of a priority of the downstream device reaches a first threshold, the downstream device sends a pause message to the upstream device. After receiving the pause message, the upstream device stops sending a packet of the priority. When packet stacking falls back below a second threshold, the downstream device sends a sending resumption message of the priority to the upstream device.

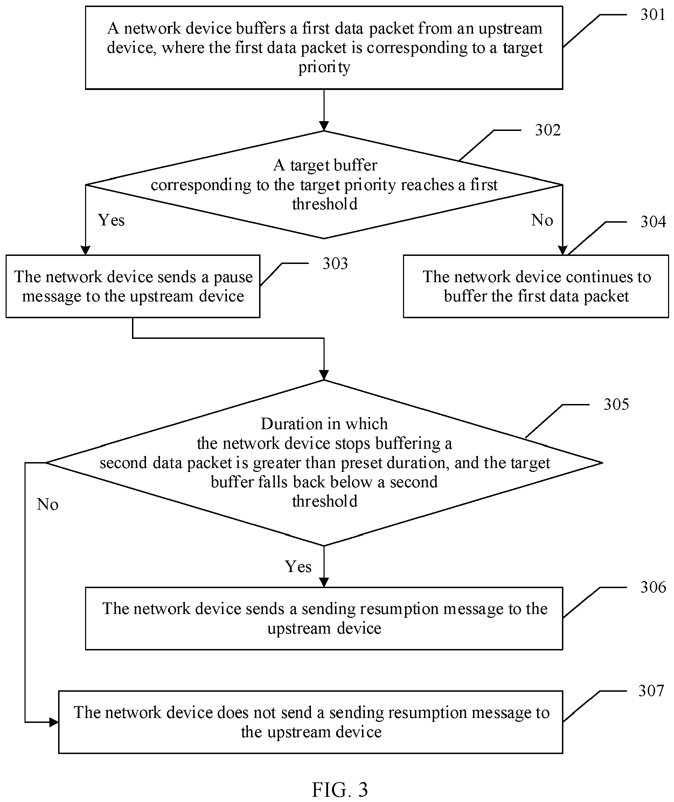

The following describes a data processing method according to an embodiment of this application. Refer to FIG. 3. FIG. 3 is a schematic flowchart of a data processing method according to an embodiment of this application. The method includes the following steps:
301: A network device buffers a first data packet from an upstream device, where the first data packet is corresponding to a target priority.

In a communication process, the network device may buffer a data packet from the upstream device. The upstream device may send, to the network device, data packets corresponding to a plurality of priorities. In this application, an example in which the network device buffers a data packet corresponding to a target priority is used for description. The data packet corresponding to the target priority includes the first data packet.

Optionally, the network device may be a switch. There are a plurality of types of switches, which may be a local area network switch or a wide area network switch. Alternatively, the switch may be another type of switch, for example, an Ethernet switch. This is not specifically limited herein.

Optionally, the upstream device may be a server, or may be another device that can perform data transmission with the network device, for example, a switch. A type of the upstream device is determined based on an actual networking case, and is not specifically limited herein.

302: The network device determines whether a target buffer corresponding to the target priority reaches a first threshold. If the target buffer corresponding to the target priority reaches the first threshold, a step 303 is performed. If the target buffer corresponding to the target priority does not reach the first threshold, a step 304 is performed.

The network device may further record the target buffer that is buffered by the network device and that is corresponding to the target priority, determine whether the target buffer reaches the first threshold, and then perform a corresponding operation based on a determining result. That the target buffer reaches the first threshold includes that the target buffer is greater than or equal to the first threshold.

303: The network device sends a pause message to the upstream device.

If the target buffer that is corresponding to the target priority and that is on the network device reaches the first threshold, it indicates that for a data packet corresponding to the target priority, a receiving capability of the network device is lower than a sending capability of the upstream device.

In this case, if the upstream device continues to send the first data packet to the network device, packet loss occurs. Therefore, to prevent packet loss, the network device may send the pause message to the upstream device. The pause message may carry a pause frame for indicating the upstream device to stop sending the first data packet to the network device.

304: The network device continues to buffer the first data packet.

If the target buffer on the network device is less than the first threshold, it indicates that the network device may further process the first data packet in time, and a receiving capability of the network device is higher than a sending capability of the upstream device or matches a sending capability of the upstream device. In this case, packet loss or congestion does not occur for the time being, and the network device may receive and buffer the first data packet.

305: The network device determines whether duration in which the network device stops buffering a second data packet is greater than preset duration and whether the target buffer falls back below a second threshold. If the duration in which the network device stops buffering the second data packet is greater than the preset duration and the target buffer falls back below the second threshold, a step 306 is performed. If the duration in which the network device stops buffering the second data packet is not greater than the preset duration and the target buffer does not fall back below the second threshold, a step 307 is performed.

Due to a delay, there is a specific period of time from a moment at which the network device sends the pause message to a moment at which the upstream device receives the pause message and stops sending the first data packet. In this period of time, the upstream device still sends a data packet corresponding to the target priority to the network device. For ease of understanding, in this embodiment of this application, the data packet corresponding to the target priority in this period of time is referred to as the second data packet. The network device may buffer the second data packet in headroom.

Based on this, the target buffer on the network device includes the buffered first data packet and the buffered second data packet. To relieve stacking, the network device may send at least one of the buffered first data packet and the buffered second data packet to a downstream device, so that the target buffer on the network device is reduced. The network device may determine whether the target buffer falls back below the second threshold. That the target buffer falls back below the second threshold includes that the target buffer is less than or equal to the second threshold.

The network device may further determine whether the duration in which the network device stops buffering the second data packet is greater than the preset duration, and perform a corresponding operation based on a determining result. The preset duration includes a difference between a flowlet gap time and in-flight duration. The flowlet gap time may be a preset period of time. The in-flight duration is a maximum value of a difference between a first moment and a second moment. The first moment is a moment at which the network device sends the pause message to the upstream device. The second moment is a moment at which the network device receives the second data packet.

306: The network device sends a sending resumption message to the upstream device.

For brevity of description, the following describes a case in which the duration in which the network device stops buffering the second data packet is greater than the preset duration as a case in which a time condition is satisfied, and describes a case in which the target buffer falls back below the second threshold as a case in which a buffer condition is satisfied.

If the network device determines that the duration in which the network device stops buffering the second data packet is greater than the preset duration, that is, if the time condition is satisfied, it indicates that a difference between a moment at which the network device receives a data packet corresponding to the target priority again and a moment at which the network device receives the second data packet exceeds the flowlet gap time. The network device considers the data packet received again as a new flowlet, so that data flow segmentation is implemented and congestion is relieved.

If the target buffer falls back below the second threshold, that is, if the buffer condition is satisfied, it indicates that the network device has space to buffer the data packet corresponding to the target priority.

When the network device determines that the duration in which the network device stops buffering the second data packet is greater than the preset duration, and the target buffer falls back below the second threshold, the network device may send a sending resumption message to the upstream device. The sending resumption message indicates the upstream device to send a third data packet corresponding to the target priority to the network device.

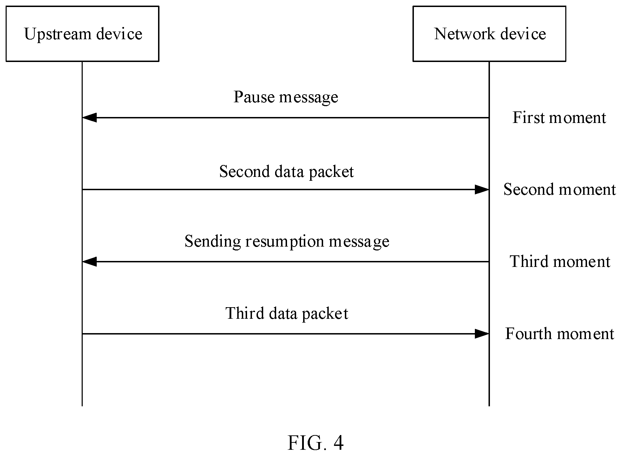

In this embodiment of this application, the network device determines whether the time condition is satisfied in a plurality of manners. For clarity of description, refer to FIG. 4. FIG. 4 is another schematic flowchart of a data processing method according to an embodiment of this application. As shown in FIG. 4, when the target buffer reaches the first threshold, the network device may send the pause message to the upstream device at a first moment. After the network device sends the pause message and before the upstream device receives the pause message, the upstream device may further send the second data packet to the network device. A moment at which the network device receives the second data packet is recorded as a second moment. When the time condition and the buffer condition are satisfied, the network device may send the sending resumption message to the upstream device at a third moment, and receive the third data packet at a fourth moment.

Optionally, the network device may start a first timer at the second moment. If duration recorded by the first timer is the preset duration, that is, the difference between the flowlet gap time and the in-flight duration, it may be determined that the time condition is satisfied. The flowlet gap time may be a preset period of time. The in-flight duration is a maximum value of a difference between the first moment and the second moment. Because there may be a plurality of second data packets, the network device may reset the first timer once each time the network device receives one second data packet, so that the first timer starts timing again.

In this method, whether the time condition is satisfied is determined by dynamically updating timing, which is more flexible for determining. In addition, the network device starts the timer only when receiving the second data packet, reducing overheads caused by premature start of the timer, thereby saving resources.

Optionally, the network device may further start a second timer at the first moment. If duration recorded by the second timer is greater than the flowlet gap time, it may be determined that the time condition is satisfied.

In this manner, the network device does not need to frequently update the timer, thereby saving operation resources.

Optionally, the network device may not start a timer. The network device may record a difference between a current moment and the second moment. If the difference is greater than the preset duration, that is, is greater than the difference between the flowlet gap time and the in-flight duration, the network device may determine that the time condition is satisfied. It should be understood that, during actual application, a difference between the fourth moment and the third moment is approximately the same as a difference between the second moment and the first moment. Therefore, when the time condition is satisfied, a difference between the fourth moment and the second moment is greater than the flowlet gap time. In other words, the second data packet and the third data packet are distributed to different flowlets, so that congestion is relieved. Optionally, the network device may further record a difference between the current moment and the first moment. If the difference is greater than the flowlet gap time, the network device may determine that the time condition is satisfied.

In this embodiment of this application, the network device determines whether the time condition is satisfied in the foregoing possible manners, and may select a possible manner based on an actual application requirement. This is not specifically limited herein.

307: The network device does not send the sending resumption message to the upstream device.

If the network device determines that a current situation does not satisfy the condition of sending the sending resumption message to the upstream device, the network device does not send the sending resumption message to the upstream device at the current moment, but sends the sending resumption message to the upstream device when the condition is satisfied.

Specifically, there are a plurality of possible cases that the current situation does not satisfy the condition of sending the sending resumption message to the upstream device. The current situation may not satisfy the time condition but satisfy the buffer condition. In this case, the network device may continue to wait. Alternatively, the current situation may not satisfy the buffer condition but satisfy the time condition. In this case, the network device may send at least one of the buffered first data packet and the buffered second data packet to the downstream device, to reduce the target buffer. In addition, there may be another case. For example, neither the time condition nor the buffer condition is satisfied. In this case, the network device may send at least one of the buffered first data packet and the buffered second data packet to the downstream device while waiting. When the current situation does not satisfy the condition of sending the sending resumption message to the upstream device, an operation of the network device is selected based on an actual application requirement. This is not specifically limited herein.

Optionally, after the step 306, the network device may further receive the third data packet sent by the upstream device. The third data packet is corresponding to the target priority. An interval between the third data packet and the second data packet is greater than the flowlet gap time. Therefore, the network device may determine that the third data packet and the second data packet belong to different flowlets, and forward the third data packet through an outgoing interface with a light load.

In this embodiment of this application, when the buffer space is insufficient, the network device sends the pause message to the upstream device, so that the upstream device stops sending a data packet corresponding to the target priority. The network device further controls duration in which the upstream device stops sending the data packet, so that data packets in a data flow are distributed to different flowlets, reducing a congestion degree of a transmission link, thereby improving stability and reliability of data transmission.

Further, the network device determines, in a plurality of manners, whether the time condition is satisfied, and may select a proper manner based on an actual application requirement, thereby improving flexibility and implementability of technical solutions.

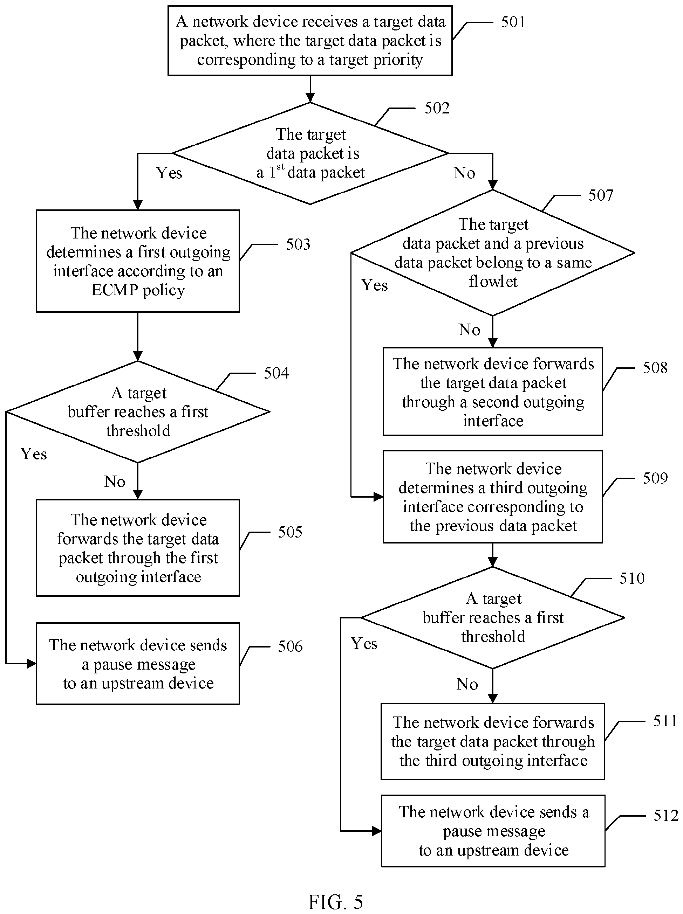

Optionally, when receiving the target data packet corresponding to the target data flow in the target priority, the network device processes the target data packet according to a procedure shown in FIG. 5. The following describes this procedure. Refer to FIG. 5. FIG. 5 is a schematic flowchart of a data processing method according to an embodiment of this application. The method includes the following steps:
501: A network device receives a target data packet, where the target data packet is corresponding to a target priority.

The network device may receive the target data packet that is corresponding to the target priority and that is sent by an upstream device.

502: The network device determines whether the target data packet is a 1^{st} data packet. If the target data packet is the 1^{st} data packet, a step 503 is performed. If the target data packet is not the 1^{st} data packet, a step 507 is performed.

After receiving the target data packet, the network device determines whether the target data packet is the 1^{st} data packet. The 1^{st} data packet is the first one of data packets that is corresponding to a target data flow in the target priority and that is received by the network device.

503: The network device determines a first outgoing interface based on an ECMP policy.

If the network device determines that the target data packet is the 1^{st} data packet, the network device may perform hash routing according to the ECMP policy, and determine the first outgoing interface for forwarding the target data packet.

504: The network device determines whether a target buffer reaches a first threshold. If the target buffer reaches the first threshold, a step 506 is performed. If the target buffer does not reach the first threshold, a step 505 is performed.

After the network device determines the first outgoing interface, because a buffer situation is not considered during hash routing, the network device may further determine a relationship between the target buffer and the first threshold, and perform a corresponding operation based on a determining result.

505: The network device forwards the target data packet through the first outgoing interface.

If the target buffer is less than the first threshold, the network device may forward the target data packet through the first outgoing interface.

506: The network device sends a pause message to the upstream device.

If the target buffer reaches the first threshold, it indicates that congestion occurs, and the network device cannot forward the target data packet in time. To relieve congestion, the network device may send the pause message to the upstream device, that is, trigger the step 303 in the embodiment shown in FIG. 3.

507: The network device determines whether the target data packet and a previous data packet belong to a same flowlet. If the target data packet and the previous data packet belong to the same flowlet, a step 509 is performed. If the target data packet and the previous data packet do not belong to the same flowlet, a step 508 is performed.

When the target data packet is not the 1^{st} data packet, the network device may determine, based on a value relationship between a flowlet gap time and a difference between a moment at which the target data packet is received and a moment at which the previous data packet is received, whether the target data packet and the previous data packet belong to the same flowlet. If the difference is greater than the flowlet gap time, the network device may determine that the target data packet belongs to a new flowlet. If the difference is less than or equal to the flowlet gap time, the network device may determine that the target data packet and the previous data packet belong to the same flowlet. The previous data packet is a data packet that is corresponding to the target data flow in the target priority and that is received by the network device previous to the target data packet received by the network device. In other words, the target data packet and the previous data packet are adjacent data packets.

508: The network device forwards the target data packet through a second outgoing interface.

If the network device determines that the target data packet and the previous data packet belong to different flowlets, the network device may select the second outgoing interface with a light load from a plurality of outgoing interfaces, to forward the target data packet. Optionally, the second outgoing interface may be an outgoing interface with a minimum load at a current moment in the plurality of outgoing interfaces.

509: The network device determines a third outgoing interface corresponding to the previous data packet.

If the network device determines that the target data packet and the previous data packet belong to the same flowlet, the network device may determine the third outgoing interface corresponding to the previous data packet, and perform a corresponding operation based on the relationship between the target buffer and the first threshold.

510: The network device determines whether the target buffer reaches the first threshold. If the target buffer reaches the first threshold, a step 512 is performed. If the target buffer does not reach the first threshold, a step 511 is performed.

511: The network device forwards the target data packet through the third outgoing interface.

512: The network device sends the pause message to the upstream device.

The step 510 to step 512 are similar to the step 504 to step 506, and details are not described herein again. A difference lies in that: in the step 510 to step 512, an outgoing interface of the target data packet is the third outgoing interface corresponding to the previous data packet; but in the step 504 to step 506, an outgoing interface of the target data packet is the first outgoing interface determined according to the ECMP policy.

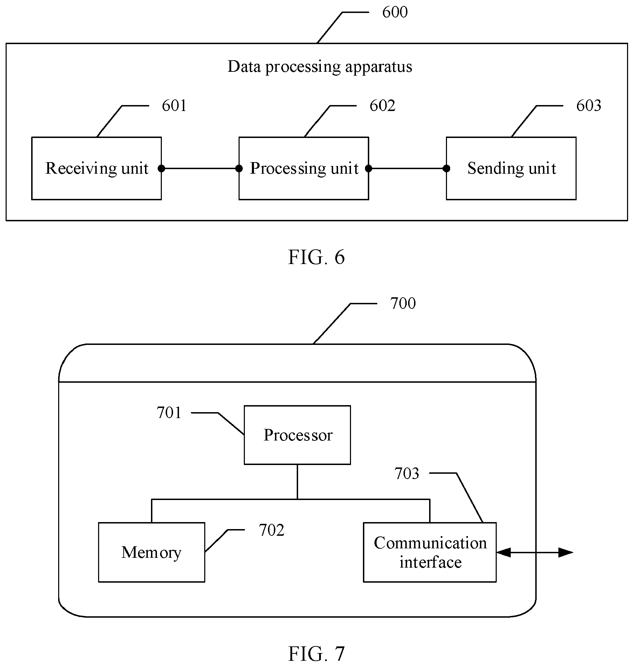

The following describes a data processing apparatus according to an embodiment of this application. Refer to FIG. 6. FIG. 6 is a schematic diagram of a structure of a data processing apparatus 600, including a sending unit 603.

The sending unit 603 is configured to: send a pause message to an upstream device if a target buffer that is corresponding to a target priority and that is on the data processing apparatus reaches a first threshold, where the pause message indicates the upstream device to stop sending a first data packet corresponding to the target priority; and send a sending resumption message to the upstream device if duration in which the data processing apparatus stops buffering a second data packet is greater than preset duration and the target buffer falls back below a second threshold, where the sending resumption message indicates the upstream device to send a third data packet corresponding to the target priority to the data processing apparatus, and the second data packet is a data packet that is buffered after the data processing apparatus sends the pause message and before the data processing apparatus sends the sending resumption message and that is corresponding to the target priority.

In some optional embodiments, the data processing apparatus 600 further includes a receiving unit 601 and a processing unit 602.

The receiving unit 601 is configured to receive a target data packet sent by the upstream device, where the target data packet is corresponding to the target priority.

The processing unit 602 is configured to determine, according to an ECMP policy, a first outgoing interface corresponding to the target data packet if the target data packet is a 1^{st} data packet, where the 1^{st} data packet is the first one of data packets that is corresponding to a target data flow in the target priority and that is received by the data processing apparatus.

In some optional embodiments, the sending unit 603 is further configured to send the target data packet through the first outgoing interface if the target buffer is less than the first threshold.

In some optional embodiments, the processing unit 602 is further configured to: determine, if the target data packet is not the 1^{st} data packet, a time interval between receiving the target data packet and receiving a previous data packet of the target data packet, where the previous data packet is corresponding to the target data flow in the target priority; and determine, if the time interval is greater than a flowlet gap time, that the target data packet and the previous data packet belong to different flowlets; or determine, if the time interval is less than or equal to a flowlet gap time, that the target data packet and the previous data packet belong to a same flowlet.

The sending unit 603 is further configured to forward, if the target data packet and the previous data packet belong to different flowlets, the target data packet through a second outgoing interface. In some optional embodiments, the sending unit 603 is further configured to forward the target data packet through a third outgoing interface corresponding to the previous data packet if the target buffer is less than the first threshold. In some optional embodiments, the processing unit 602 is further configured to: start a first timer when receiving the second data packet; and determine, if duration recorded by the first timer is greater than the preset duration, that the duration in which the data processing apparatus stops buffering the second data packet is greater than the preset duration.

In some optional embodiments, the processing unit 602 is further configured to: start a second timer when sending the pause message to the upstream device; and determine, if duration recorded by the second timer is greater than the flowlet gap time, that the duration in which the data processing apparatus stops buffering the second data packet is greater than the preset duration. In some optional embodiments, the receiving unit 601 is further configured to receive the second data packet from the upstream device.

The processing unit 602 is further configured to determine, if a difference between a current moment and a receiving moment of the second data packet is greater than the preset duration, that the duration in which the data processing apparatus stops buffering the second data packet is greater than the preset duration.

In some optional embodiments, the processing unit 602 is further configured to: determine, if a difference between a current moment and a moment at which the data processing apparatus sends the pause message to the upstream device is greater than the flowlet gap time, that the duration in which the data processing apparatus stops buffering the second data packet is greater than the preset duration.

In some optional embodiments, the preset duration includes a difference between the flowlet gap time and in-flight duration. The in-flight duration is a maximum value of a difference between a first moment and a second moment. The first moment is a moment at which the data processing apparatus sends the pause message to the upstream device. The second moment is a moment at which the data processing apparatus receives the second data packet.

In some optional embodiments, the receiving unit 601 is further configured to receive the third data packet from the upstream device.

The processing unit 602 is further configured to determine that the third data packet and the first data packet or the second data packet belong to different flowlets.

In some optional embodiments, the processing unit 602 is further configured to control, if the duration in which the data processing apparatus stops buffering the second data packet is less than or equal to the preset duration, and/or the target buffer is greater than the second threshold, the data processing apparatus not to send the sending resumption message to the upstream device.

The data processing apparatus 600 may perform operations performed by the downstream device in the embodiment shown in FIG. 2 and operations performed by the network device in the embodiments shown in FIG. 3 to FIG. 5. Details are not described herein again.

The following describes a network device according to an embodiment of this application. Refer to FIG. 7. FIG. 7 is a schematic diagram of a structure of a network device according to an embodiment of this application. The network device 700 includes a processor 701 and a memory 702. The memory 702 stores one or more application programs or data.

The memory 702 may be volatile storage or persistent storage. The program stored in the memory 702 may include one or more modules, and each module may be configured to perform a series of operations performed by the network device 700. Further, the processor 701 may be in communication with the memory 702, and perform, on the network device 700, a series of instruction operations in the memory 702. The processor 701 may be a central processing unit (central processing unit, CPU), or may be a single-core processor. Alternatively, the processor 701 may be another type of processor, for example, a dual-core processor. This is not specifically limited herein.

The network device 700 may further include one or more communication interfaces 703, and one or more operating systems such as Windows Server^{™}, Mac OS X^{™}, Unix^{™}, Linux^{™}, and FreeBSD^{™}.

The network device 700 may perform operations performed by the downstream device in the embodiment shown in FIG. 2 and operations performed by the network device in the embodiments shown in FIG. 3 to FIG. 5. Details are not described herein again.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be omitted or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The foregoing integrated unit may be implemented in a form of hardware, or may be implemented in a form of a software functional unit.

If the integrated unit is implemented in a form of a software functional unit and is sold or used as an independent product, the integrated unit may be stored in a computer-readable storage medium. Based on this understanding, the technical solutions of this application essentially, or a part that contributes to the conventional technology, or all or a part of the technical solutions may be embodied in a form of a software product. The computer software product is stored in a storage medium, and includes several instructions used to enable a computer device (which may be a personal computer, a server, a network device, or the like) to perform all or some of the steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A data processing method, comprising:
sending, by a network device, a pause message to an upstream device if a target buffer that is corresponding to a target priority and that is on the network device reaches a first threshold, wherein the pause message indicates the upstream device to stop sending a first data packet corresponding to the target priority; and
sending, by the network device, a sending resumption message to the upstream device if duration in which the network device stops buffering a second data packet is greater than preset duration, and the target buffer falls back below a second threshold, wherein the sending resumption message indicates the upstream device to send a third data packet corresponding to the target priority to the network device, and the second data packet is a data packet that is buffered after the network device sends the pause message and before the network device sends the sending resumption message and that is corresponding to the target priority.

2. The method according to claim 1, wherein before the sending, by a network device, a pause message to an upstream device, the method further comprises:
receiving, by the network device, a target data packet sent by the upstream device, wherein the target data packet is corresponding to the target priority; and
determining, by the network device according to an equal-cost multi-path routing ECMP policy, a first outgoing interface corresponding to the target data packet if the target data packet is a 1^{st} data packet, wherein the 1^{st} data packet is the first one of data packets that is corresponding to a target data flow in the target priority and that is received by the network device.

3. The method according to claim 2, wherein after the determining a first outgoing interface corresponding to the target data packet, the method further comprises:
sending, by the network device, the target data packet through the first outgoing interface if the target buffer is less than the first threshold.

4. The method according to claim 2, wherein if the target data packet is not the 1^{st} data packet, the network device determines a time interval between receiving the target data packet and receiving a previous data packet of the target data packet, wherein the previous data packet is corresponding to the target data flow in the target priority; and
if the time interval is greater than a flowlet gap time, the network device determines that the target data packet and the previous data packet belong to different flowlets, and forwards the target data packet through a second outgoing interface; or
if the time interval is less than or equal to a flowlet gap time, the network device determines that the target data packet and the previous data packet belong to a same flowlet.

5. The method according to claim 4, wherein after the network device determines that the target data packet and the previous data packet belong to the same flowlet, the method further comprises:
forwarding, by the network device, the third data packet through a third outgoing interface corresponding to the previous data packet if the target buffer is less than the first threshold.

6. The method according to any one of claims 1 to 5, wherein after the sending, by a network device, a pause message to an upstream device, the method further comprises:
starting, by the network device, a first timer when receiving the second data packet; and
determining, by the network device if duration recorded by the first timer is greater than the preset duration, that the duration in which the network device stops buffering the second data packet is greater than the preset duration.

7. The method according to any one of claims 1 to 5, wherein the method further comprises:
starting, by the network device, a second timer when sending the pause message to the upstream device; and
determining, by the network device if duration recorded by the second timer is greater than the flowlet gap time, that the duration in which the network device stops buffering the second data packet is greater than the preset duration.

8. The method according to any one of claims 1 to 5, wherein after the sending, by a network device, a pause message to an upstream device, the method further comprises:
receiving, by the network device, the second data packet from the upstream device; and
determining, by the network device if a difference between a current moment and a receiving moment of the second data packet is greater than the preset duration, that the duration in which the network device stops buffering the second data packet is greater than the preset duration.

9. The method according to any one of claims 1 to 5, wherein the method further comprises:
determining, by the network device if a difference between a current moment and a moment at which the network device sends the pause message to the upstream device is greater than the flowlet gap time, that the duration in which the network device stops buffering the second data packet is greater than the preset duration.

10. The method according to any one of claims 1 to 9, wherein the preset duration comprises:
a difference between the flowlet gap time and in-flight duration, wherein the in-flight duration is a maximum value of a difference between a first moment and a second moment, the first moment is a moment at which the network device sends the pause message to the upstream device, and the second moment is a moment at which the network device receives the second data packet.

11. The method according to any one of claims 1 to 10, wherein after the sending, by the network device, a sending resumption message to the upstream device, the method further comprises:
receiving, by the network device, the third data packet from the upstream device, and determining that the third data packet and the first data packet or the second data packet belong to different flowlets.

12. The method according to any one of claims 1 to 11, wherein if the duration in which the network device stops buffering the second data packet is less than or equal to the preset duration, and/or the target buffer is greater than the second threshold, the network device does not send the sending resumption message to the upstream device.

13. A data processing apparatus, comprising:
a sending unit, configured to:
send a pause message to an upstream device if a target buffer that is corresponding to a target priority and that is on the data processing apparatus reaches a first threshold, wherein the pause message indicates the upstream device to stop sending a first data packet corresponding to the target priority; and
send a sending resumption message to the upstream device if duration in which the data processing apparatus stops buffering a second data packet is greater than preset duration and the target buffer falls back below a second threshold, wherein the sending resumption message indicates the upstream device to send a third data packet corresponding to the target priority to the data processing apparatus, and the second data packet is a data packet that is buffered after the data processing apparatus sends the pause message and before the data processing apparatus sends the sending resumption message and that is corresponding to the target priority.

14. The data processing apparatus according to claim 13, wherein the data processing apparatus further comprises a receiving unit and a processing unit, wherein
the receiving unit is configured to receive a target data packet sent by the upstream device, wherein the target data packet is corresponding to the target priority; and
the processing unit is configured to determine, according to an ECMP policy, a first outgoing interface corresponding to the target data packet if the target data packet is a 1^{st} data packet, wherein the 1^{st} packet is the first one of data packets that is corresponding to a target data flow in the target priority and that is received by the data processing apparatus.

15. The data processing apparatus according to claim 14, wherein the sending unit is further configured to send the target data packet through the first outgoing interface if the target buffer is less than the first threshold.

16. The data processing apparatus according to claim 14, wherein the processing unit is further configured to:
determine, if the target data packet is not the 1^{st} data packet, a time interval between receiving the target data packet and receiving a previous data packet of the target data packet, wherein the previous data packet is corresponding to the target data flow in the target priority; and
determine, if the time interval is greater than a flowlet gap time, that the target data packet and the previous data packet belong to different flowlets; or
determine, if the time interval is less than or equal to a flowlet gap time, that the target data packet and the previous data packet belong to a same flowlet; and
the sending unit is further configured to forward, if the target data packet and the previous data packet belong to different flowlets, the target data packet through a second outgoing interface.

17. The data processing apparatus according to claim 16, wherein the sending unit is further configured to forward the target data packet through a third outgoing interface corresponding to the previous data packet if the target buffer is less than the first threshold.

18. The data processing apparatus according to any one of claims 13 to 17, wherein the processing unit is further configured to:
start a first timer when receiving the second data packet; and
determine, if duration recorded by the first timer is greater than the preset duration, that the duration in which the data processing apparatus stops buffering the second data packet is greater than the preset duration.

19. The data processing apparatus according to any one of claims 13 to 17, wherein the processing unit is further configured to:
start a second timer when sending the pause message to the upstream device; and
determine, if duration recorded by the second timer is greater than the flowlet gap time, that the duration in which the data processing apparatus stops buffering the second data packet is greater than the preset duration.

20. The data processing apparatus according to any one of claims 13 to 17, wherein the receiving unit is further configured to receive the second data packet from the upstream device; and
the processing unit is further configured to determine, if a difference between a current moment and a receiving moment of the second data packet is greater than the preset duration, that the duration in which the data processing apparatus stops buffering the second data packet is greater than the preset duration.

21. The data processing apparatus according to any one of claims 13 to 17, wherein the processing unit is further configured to:
determine, if a difference between a current moment and a moment at which the data processing apparatus sends the pause message to the upstream device is greater than the flowlet gap time, that the duration in which the data processing apparatus stops buffering the second data packet is greater than the preset duration.

22. The data processing apparatus according to any one of claims 13 to 21, wherein the preset duration comprises:
a difference between the flowlet gap time and in-flight duration, wherein the in-flight duration is a maximum value of a difference between a first moment and a second moment, the first moment is a moment at which the data processing apparatus sends the pause message to the upstream device, and the second moment is a moment at which the data processing apparatus receives the second data packet.

23. The data processing apparatus according to any one of claims 13 to 22, wherein the receiving unit is further configured to receive the third data packet from the upstream device; and
the processing unit is further configured to determine that the third data packet and the first data packet or the second data packet belong to different flowlets.

24. The data processing apparatus according to any one of claims 13 to 23, wherein the processing unit is further configured to control, if the duration in which the data processing apparatus stops buffering the second data packet is less than or equal to the preset duration, and/or the target buffer is greater than the second threshold, the data processing apparatus not to send the sending resumption message to the upstream device.

25. A network device, comprising a processor, a memory, and a communication interface, wherein
the processor and the memory are connected to the communication interface; and
the processor is configured to perform the method according to any one of claims 1 to 12.

26. A computer-readable storage medium, wherein the computer-readable storage medium stores a program; and when the program is executed by a computer, the method according to any one of claims 1 to 12 is performed.
